# EUROPEAN PATENT APPLICATION

(11) **EP 4 711 887 A1**
(43) Date of publication of application: **18.03.2026**
(21) Application number: 24818481.4
(22) Date of filing: 20.05.2024
(51) Int. Cl.: G06F 1/08

(54) **INSTRUCTION EXECUTION METHOD AND APPARATUS, AND INSTRUCTION GENERATION METHOD AND APPARATUS**

(30) Priority: 09.06.2023 CN 202310686351
(71) Applicant: Beijing Horizon Information Technology Co., Ltd., Beijing 100094 (CN)
(72) Inventor: HE, Haoqian, Beijing 100094 (CN); QU, Xinyuan, Beijing 100094 (CN); XIAO, Lei, Beijing 100094 (CN); HE, Yibo, Beijing 100094 (CN)
(74) Representative: Patentanwälte Magenbauer & Kollegen Partnerschaft mbB
(86) International application number: PCT/CN2024/094197
(87) International publication number: WO 2024/250948

(57) **Abstract**

Disclosed are an instruction execution method and apparatus, and an instruction generation method and apparatus, relating to the technical field of integrated circuits. The instruction execution apparatus comprises: a clock signal generation module, used for adjusting a first clock frequency of a first clock signal generated by a clock signal source, so as to generate an output clock signal, the clock frequency of the output clock signal comprising a second clock frequency, and the second clock frequency being lower than the first clock frequency; and a hardware computation module, used for determining an operation instruction and executing the operation instruction according to the output clock signal. The embodiments of the present disclosure can reduce the rate of change of power consumption of the hardware computation module. Therefore, the amplitude of a voltage drop of a neural network processor is small, and it is ensured that the voltage of the neural network processor is always in a working voltage range, which may not only ensure the accuracy of operation results, but also avoid the occurrence of abnormalities in the neural network processor.

## Description

### CROSS-REFERENCE TO RELATED APPLICATION

This disclosure claims the benefit of priority to Chinese patent application No. CN202310686351.1 filed on June 9, 2023, titled INSTRUCTION EXECUTION METHOD AND APPARATUS, AND INSTRUCTION GENERATION METHOD AND APPARATUS, content of which is incorporated herein by reference in its entirety.

### FIELD OF THE INVENTION

This disclosure relates to field of integrated circuit (IC) technology, and in particular, to an instruction execution method and apparatus, and an instruction generation method and apparatus.

### BACKGROUND OF THE INVENTION

Generally, when voltage of a neural network processor is within a operating voltage range thereof, the neural network processor is guaranteed to operate stably. However, while the neural network processor operates, increasing power consumption of the neural network processor may cause increase of the current output to the neural network processor, and then cause the voltage output to the neural network processor to drop. If the voltage of the neural network processor drops below the minimum operating voltage within the operating voltage range, the neural network processor may give a wrong operation result, and even neural network processor abnormality may occur.

### SUMMARY OF THE INVENTION

To solve the technical problem as described above, this disclosure provides an instruction execution method and apparatus, and an instruction generation method and apparatus, to ensure that when the state of the neural network processor changes from the nonoperating state to the operating state, the operation result of the neural network processor is correct, and no neural network processor abnormality may occur.

A first aspect of this disclosure provides an instruction execution apparatus for a neural network processor, comprising: a clock signal generating module, configured to adjust a first clock frequency of a first clock signal produced by a clock signal source to generate an output clock signal, wherein a clock frequency of the output clock signal comprises a second clock frequency, the second clock frequency being lower than the first clock frequency; and a hardware computing module, configured to determine operation instructions, and execute the operation instructions based on the output clock signal.

A second aspect of this disclosure provides an instruction generation method for a neural network processor, comprising: first, determining a first instruction sequence corresponding to a neural network model to be processed by a neural network processor; second, determining, based on hardware resources of the neural network processor, power consumption of respective hardware units in executing respective instructions of the first instruction sequence; third, determining an instruction executed by a first hardware unit among the hardware units whose power consumption is greater than a power consumption threshold as a first instruction; after that, generating, based on the first instruction, a second instruction having an input data address and an output data address that are the same as those of the first instruction; and finally, generating, based on the first instruction sequence and the second instruction, a second instruction sequence executable by the neural network processor.

A third aspect of this disclosure provides an instruction execution method for a neural network processor, comprising: first, determining a plurality of operation instructions for processing feature data; second, processing the feature data based on a second instruction in the plurality of operation instructions, to obtain a first output data; and finally, processing the feature data based on a first instruction in the plurality of operation instructions which has an input data address and an output data address that are the same as those of the second instruction, to obtain a second output data.

A fourth aspect of this disclosure provides an instruction generation apparatus for a neural network processor, comprising: a first determining module, configured to determine a first instruction sequence corresponding to a neural network model to be processed by a neural network processor; a second determining module, configured to determine, based on hardware resources of the neural network processor, power consumption of respective hardware units in executing respective instructions of the first instruction sequence; a third determining module, configured to determine an instruction executed by a first hardware unit among the hardware units whose power consumption is greater than a power consumption threshold as a first instruction; a first generating module, configured for generating, based on the first instruction, a second instruction having an input data address and an output data address that are the same as those of the first instruction; and a second generating module, configured for generating, based on the first instruction sequence and the second instruction, a second instruction sequence executable by the neural network processor.

A fifth aspect of this disclosure provides an instruction execution apparatus for a neural network processor, comprising: a first determining module, configured to determine a plurality of operation instructions for processing feature data; a first processing module, configured for processing the feature data based on a second instruction in the plurality of operation instructions, to obtain a first output data; and a second processing module, configured for processing the feature data based on a first instruction in the plurality of operation instructions which has an input data address and an output data address that are the same as those of the second instruction, to obtain a second output data.

A sixth aspect of this disclosure provides a computer-readable storage medium, the storage medium storing thereon a computer program, the computer program being configured for implementing the instruction generation method for a neural network processor according to embodiments of the second aspect of this disclosure, or implementing the instruction execution method for a neural network processor according to embodiments of the third aspect of this disclosure.

A seventh aspect of this disclosure provides an electronic device, the electronic device comprising: a processor; and a memory configured for storing processor-executable instructions, wherein the processor is configured for reading the executable instructions in the memory, and executing the executable instructions to implement the instruction generation method for a neural network processor according to embodiments of the second aspect of this disclosure, or implement the instruction execution method for a neural network processor according to embodiments of the third aspect of this disclosure.

Embodiments of an eighth aspect of this disclosure propose a computer program product. When instructions in the computer program product are executed by a processor, the instruction generation method for a neural network processor according to embodiments of the second aspect of this disclosure or the instruction execution method for a neural network processor according to embodiments of the third aspect of this disclosure is implemented.

Embodiments of this disclosure provide an instruction execution apparatus for a neural network processor, wherein the instruction execution apparatus adjusts a first clock frequency of a first clock signal produced by a clock signal source to obtain an output clock signal. When a state of the neural network processor changes from a nonoperating state to a operating state, as a second clock frequency of the output clock signal is lower than the first clock frequency of the first clock signal, when a hardware computing module operates based on the output clock signal, this can reduce a power consumption change rate of the hardware computing module, and therefore, the voltage drop of the neural network processor is relatively small, ensuring that the voltage of the neural network processor always remains within the operating voltage range, which not only guarantees accuracy of the operation result, but also enables to prevent neural network processor abnormality. That is, embodiments of this disclosure reduce the power consumption change rate of the neural network processor, such that the voltage change of the neural network processor is relatively small, thereby ensuring that the voltage of the neural network processor always remains within the operating voltage range when the state of the neural network processor changes from the nonoperating state to the operating state.

### BRIEF DESCRIPTION OF THE DRAWINGS

FIG. 1 is a diagram of a structure of an instruction execution apparatus for a neural network processor according to an illustrative embodiment of this disclosure.
FIG. 2 is a diagram of a first clock signal and an output clock signal according to an illustrative embodiment of this disclosure.
FIG. 3 is a diagram of a structure of an instruction execution apparatus for a neural network processor according to another illustrative embodiment of this disclosure.
FIG. 4 is a diagram of a structure of an instruction execution apparatus for a neural network processor according to still another illustrative embodiment of this disclosure.
FIG. 5 is a diagram of a structure of an electronic device according to an illustrative embodiment of this disclosure.
FIG. 6 is a diagram of a structure of an electronic device according to another illustrative embodiment of this disclosure.
FIG. 7 is a flowchart of an instruction generation method for a neural network processor according to an illustrative embodiment of this disclosure.
FIG. 8 is a flowchart of an instruction generation method for a neural network processor according to another illustrative embodiment of this disclosure.
FIG. 9 is a flowchart of an instruction generation method for a neural network processor according to still another illustrative embodiment of this disclosure.
FIG. 10 is a flowchart of an instruction execution method for a neural network processor according to an illustrative embodiment of this disclosure.
FIG. 11 is a diagram of a structure of an instruction generation apparatus for a neural network processor according to an illustrative embodiment of this disclosure.
FIG. 12 is a diagram of a structure of an instruction execution apparatus for a neural network processor according to an illustrative embodiment of this disclosure.
FIG. 13 is a diagram of a structure of an electronic device according to still another illustrative embodiment of this disclosure.

### DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements, numeric expressions, and numbers of components and steps described in these embodiments.

### Disclosure overview

Generally, a neural network processor may be powered using a power management chip (power management IC, PMIC), to guarantee that the voltage of the neural network processor is within the operating voltage range, to enable the unit to operate normally.

In actual application, when the neural network processor is in a operating state, a hardware computing module (such as a multiply-accumulator or a multiplier) in the neural network processor executes an operation instruction; and when the neural network processor is in a nonoperating state, the hardware computing module in the neural network processor executes no operation instruction. When the state of the neural network processor changes from the nonoperating state to the operating state, the hardware computing module in the neural network processor changes from not operating to operating every clock cycle, and therefore, the power consumption change rate of the neural network processor is great. As power consumption of the neural network processor increases, the load of the PMIC may increase continuously, causing increase of the current output by the PMIC to the neural network processor, and then causing the voltage provided by the PMIC to the neural network processor to drop, causing great voltage drop of the neural network processor. If the voltage drops below the minimum operating voltage within the operating voltage range, it may cause an error in the operation result of the neural network processor, and even neural network processor abnormality (such as internal deadlock of the neural network processor).

The operating voltage drop of the neural network processor is related to the power consumption change rate of the neural network processor. The greater the power consumption change rate of the neural network processor is, the greater the operating voltage drop of the neural network processor. Therefore, to ensure that the voltage of the neural network processor is within the operating voltage range when the state of the neural network processor changes from the nonoperating state to the operating state, the operating voltage of the neural network processor is to be adjusted.

In some embodiments, the PMIC may adjust the operating voltage output to the neural network processor using a feedback mechanism. For example, when power consumption of the neural network processor increases, i.e., when the load of the PMIC increases, the PMIC may detect the drop in the voltage output to the neural network processor, and adjust the voltage output to the neural network processor through the feedback mechanism, to compensate the drop in the operating voltage of the neural network processor.

However, a certain response time is needed for the PMIC to detect the output voltage and adjust the output voltage, and the response time is related to a operating frequency of the PMIC. However, the operating frequency of the PMIC is often lower than a operating frequency of the neural network processor, and therefore, the PMIC cannot compensate the drop in the operating voltage of the neural network processor in time. Moreover, when the state of the neural network processor changes from the nonoperating state to the operating state, power consumption of the neural network processor may increase suddenly, in which case, the operating voltage drop of the neural network processor is great, which may also cause the PMIC to fail to compensate the drop in the operating voltage of the neural network processor in time.

For example, taking the neural network processor being a brain processing unit (BPU), the operating frequency of the BPU being 1GHz, and the operating frequency of the PMIC being 1MHz as an example, when the state of the BPU changes from the nonoperating state to the operating state, power consumption of the BPU may increase suddenly, and when detecting the drop in the voltage of the BPU, the PMIC may compensate the output voltage. However, as the operating frequency of the PMIC is lower than the operating frequency of the BPU, the PMIC cannot compensate the drop in the voltage of the BPU in time, causing the voltage of the BPU to be lower than the minimum operating voltage within the operating voltage range, causing an error in the operation result of the BPU, and even internal deadlock of the BPU.

To solve the technical problem as described above, embodiments of this disclosure provide an instruction execution apparatus for a neural network processor, wherein the instruction execution apparatus adjusts a first clock frequency of a first clock signal produced by a clock signal source to obtain an output clock signal. When a state of the neural network processor changes from a nonoperating state to a operating state, as a second clock frequency of the output clock signal is lower than the first clock frequency of the first clock signal, when a hardware computing module operates based on the output clock signal, this can reduce a power consumption change rate of the hardware computing module, and therefore, voltage drop of the neural network processor is relatively small, ensuring that the voltage of the neural network processor always remains within the operating voltage range, which not only guarantees accuracy of the operation result, but also enables to prevent neural network processor abnormality. That is, embodiments of this disclosure reduce the power consumption change rate of the neural network processor, such that the voltage change of the neural network processor is relatively small, thereby ensuring that the voltage of the neural network processor always remains within the operating voltage range when the state of the neural network processor changes from the nonoperating state to the operating state.

### Illustrative instruction execution apparatus

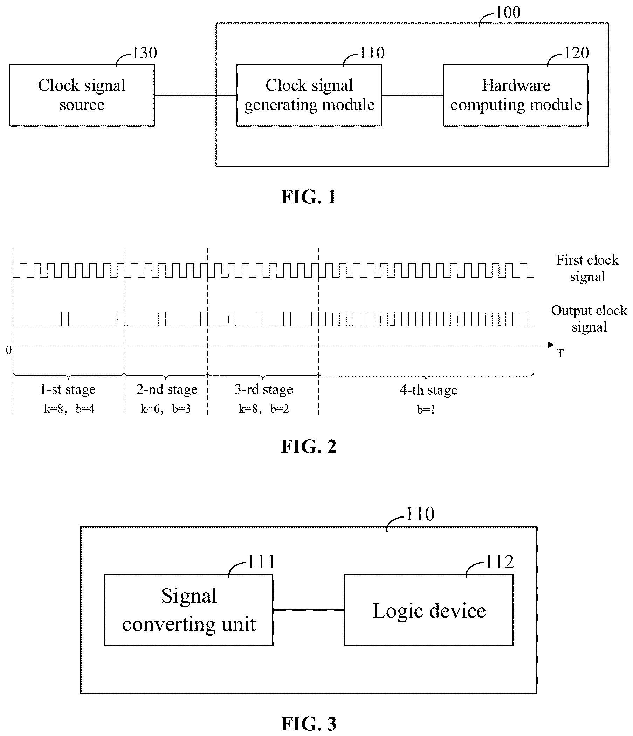

FIG. 1 is a diagram of a hardware structure of an instruction execution apparatus for a neural network processor according to an illustrative embodiment of this disclosure. As shown in FIG. 1, the instruction execution apparatus 100 comprises a clock signal generating module 110 and a hardware computing module 120.

The clock signal generating module 110 is configured to adjust a first clock frequency of a first clock signal produced by a clock signal source 130, to generate an output clock signal, wherein a clock frequency of the output clock signal comprises a second clock frequency, the second clock frequency being lower than the first clock frequency. The first clock signal is a raw clock signal produced by the clock signal source.

In some embodiments, the first clock signal may be a clock signal having a fixed duty cycle, and the clock frequency of the first clock signal is the first clock frequency. Specific numbers of the first clock frequency and of the duty cycle of the first clock signal are not limited in embodiments of this disclosure, wherein for example the first clock signal of the duty cycle may be 50%.

Illustratively, the clock signal generating module 110 is configured for reducing the first clock frequency of the first clock signal, such that the clock frequency of the generated output clock signal is lower than the first clock frequency of the first clock signal.

The hardware computing module 120 is configured to determine operation instructions, and execute the operation instructions based on the output clock signal.

Illustratively, the hardware computing module 120 may comprise a plurality of hardware units, for example the hardware computing module 120 may comprise a plurality of accumulators, multipliers, multiply-accumulators, etc., wherein a type of a hardware unit comprised in the hardware computing module 120 is not limited in embodiments of this disclosure. The operation instructions comprise but are not limited to instructions for any one or plurality of convolution operation, addition operation, subtraction operation, saturation operation, activation operation, etc.

In some examples, taking that the hardware computing module 120 is triggered by a rising edge as an example, the hardware computing module 120 executes the operation instructions when a rising edge of the output clock signal arrives. That is, an operation frequency (which may also be referred to as operating frequency) of the hardware computing module 120 is related to an interval between rising edges of two adjacent pulse signals in the output clock signal. The greater the interval between the rising edges of two adjacent pulse signals in the output clock signal is, the lower the clock frequency of the output clock signal, and also the lower the operation frequency of the hardware computing module 120, following which the power consumption change rate of the neural network processor when the state of the neural network processor changes from the nonoperating state to the operating state is also reduced.

As the clock signal generating module 110 can reduce the first clock frequency of the first clock signal to generate the output clock signal, when the hardware computing module 120 executes the operation instructions based on the output clock signal with a lower clock frequency, it can reduce the power consumption change rate of the neural network processor.

For example, taking that the clock frequency of the first clock signal is frequency f1 and that the clock frequency of the output clock signal is frequency f2 as an example, using the solution in related art, when the state of the neural network processor changes from the nonoperating state to the operating state, the hardware computing module 120 executes the operation instructions based on the first clock signal. However, as the clock frequency of the first clock signal is always frequency f1 (the clock frequency of the first clock signal being high), the operation frequency of the hardware computing module 120 is high, causing a great power consumption change rate of the neural network processor. Whereas using a technical solution according to this disclosure, since the clock signal generating module 110 can reduce the frequency f1 of the first clock signal to frequency f2. Therefore the operation frequency of the hardware computing module 120 is reduced, which reduces the power consumption change rate of the neural network processor, and the voltage drop of the neural network processor is relatively small, thereby ensuring that the voltage of the neural network processor always remains within the operating voltage range. Therefore, the instruction execution apparatus according to this disclosure not only guarantees accuracy of the operation result of the neural network processor, but also enables to prevent neural network processor abnormality.

In some embodiments, to improve operation efficiency of the neural network processor while ensuring that the voltage of the neural network processor remains within the operating voltage range when the state of the neural network processor changes from the nonoperating state to the operating state, the clock frequency of the output clock signal generated by the clock signal generating module 110 may be variable, and the clock frequency of the output clock signal may gradually increase from the second clock frequency to the first clock frequency. Therefore, when the hardware computing module 120 executes the operation instructions based on the output clock signal of the variable clock frequency, the voltage of the neural network processor remains within the operating voltage range, and the operation frequency of the hardware computing module 120 increases gradually, therefore improving the operation efficiency of the neural network processor.

In some examples, the clock frequency of the first clock signal may be adjusted multiple times based on a preset interval, until the clock frequency of the output clock signal gradually increases from the second clock frequency to the first clock frequency. That is, an initial clock frequency of the output clock signal is the second clock frequency, and the clock frequency of the first clock signal is adjusted once every preset interval, until the clock frequency of the output clock signal increases to the first clock frequency. Therefore, when the hardware computing module 120 executes the operation instructions based on the output clock signal of the variable clock frequency, as the clock frequency of the output clock signal is the second clock frequency which is less than the first clock frequency, the hardware computing module 120 operates at a low operation frequency when the state of the module changes from the nonoperating state to the operating state, enabling to prevent sudden increase of power consumption of the hardware computing module 120. After that, the clock frequency of the output clock signal is increased gradually from the second clock frequency to the first clock frequency based on the preset interval, such that power consumption of the hardware computing module 120 increases gradually, preventing an excessive power consumption change rate of the hardware computing module 120, ensuring that the voltage of the neural network processor always remains within the operating voltage range, and then guaranteeing accuracy of the operation result of the neural network processor, preventing neural network processor abnormality. In addition, gradually increasing the clock frequency of the output clock signal from the second clock frequency to the first clock frequency based on the preset interval may further enable gradual increase of the operation frequency of the hardware computing module 120, improving operation efficiency of the neural network processor, and then improving performance of operation of the neural network processor.

Illustratively, in adjusting the clock frequency of the first clock signal multiple times based on the preset interval, a number of pulses of the first clock signal may be counted, and the clock frequency of the first clock signal is adjusted once when the number of pulses of the first clock signal reaches a preset number of cycles. The preset interval equals a product of the preset number of cycles and a clock cycle of the first clock signal, and the first clock frequency and the clock cycle of the first clock signal are reciprocals of each other.

For example, taking the preset number of cycles being k as an example, the clock signal generating module 110 may count the number of pulses of the first clock signal produced by the clock signal source 130, and adjust the clock frequency of the first clock signal once every k pulses.

Illustratively, adjusting the clock frequency of the first clock signal once every k pulses comprises: counting the number of pulses of the first clock signal produced by the clock signal source 130, and adjusting the clock frequency of the first clock signal when the number of pulses of the first clock signal reaches k pulses, to generate the output clock signal of clock frequency f21; again counting the number of pulses of the first clock signal produced by the clock signal source 130, and again adjusting the clock frequency of the first clock signal when the number of pulses of the first clock signal again reaches k pulses, to generate the output clock signal of clock frequency f22; and repeating the foregoing process, until the clock frequency of the output clock signal increases to the first clock frequency f1.

In some examples, the adjusting the clock frequency of the first clock signal when the number of pulses of the first clock signal reaches k pulses comprises: counting the number of pulses of the first clock signal, when the number of pulses of the first clock signal reaches a pulse number threshold (the pulse number threshold being a number greater than 1), generating one pulse signal in the output clock signal, to make a clock cycle of the generated output clock signal greater than the clock cycle of the first clock signal.

For example, taking the pulse number threshold being b as an example, the clock signal generating module 110 may count the number of pulses of the first clock signal produced by the clock signal source 130; when the number of pulses of the first clock signal reaches b pulses, generate one pulse signal in the output clock signal; again count the number of pulses of the first clock signal, and when the number of pulses of the first clock signal again reaches b pulses, generate a next pulse signal in the output clock signal.

Illustratively, the pulse number threshold b may be less than the preset number of cycles k, and may also be same as the preset number of cycles. When the pulse number threshold is less than the preset number of cycles, a plurality of pulse signals in the output clock signal may be generated in every k pulses.

To improve operation efficiency of the neural network processor, the clock frequency of the output clock signal generated by the clock signal generating module 110 may increase gradually from the second clock frequency to the first clock frequency, which enables to change the size of the number of the pulse number threshold while implementing a variable clock frequency of the output clock signal. The less the number of the pulse number threshold is, the closer the clock frequency of the output clock signal to the clock frequency of the first clock signal. Illustratively, every time the clock frequency of the first clock signal is adjusted, the pulse number threshold may be reduced by a preset step size.

For example, taking the preset step size being 1 as an example, when the clock signal source 130 produces a first group of k pulses, one pulse signal in the output clock signal is generated for every other b pulses in the first group of k pulses; when the clock signal source 130 produces a second group of k pulses, one pulse signal in the output clock signal is generated for every other (b-1) pulses in the second group of k pulses; when the clock signal source 130 produces a third group of k pulses, one pulse signal in the output clock signal is generated for every other (b-2) pulses in the third group of k pulses; and so on, until the clock cycle of the generated output pulse signal is same as the clock cycle of the first clock signal. Therefore, reducing the pulse number threshold in sequence based on the preset step size ensures that the clock frequency of the generated output clock signal increases once every k pulses. The specific number of the preset step size is not limited in this disclosure, and an embodiment below is illustrated taking the preset step size being 1 as an example.

Illustratively, when generating the output clock signal, the clock signal generating module 110 may count the number of pulses of the first clock signal, and generate one pulse signal in the output clock signal when the number of pulses of the first clock signal reaches the pulse number threshold b; meanwhile, when the number of pulses of the first clock signal reaches the preset number of cycles k, adjust the clock frequency of the first clock signal, i.e., reduce the pulse number threshold b by the preset step size, to obtain an updated pulse number threshold (b-1); recount the first clock signal, and generate one pulse signal in the output clock signal when the number of pulses of the first clock signal reaches the updated pulse number threshold (b-1); meanwhile, when the number of pulses of the first clock signal again reaches the preset number of cycles k, again adjust the clock frequency of the output clock signal; and repeat the foregoing process, until the clock frequency of the output clock signal increases to the first clock frequency.

A process of generating the output clock signal of a variable clock frequency is described taking the preset number of cycles being k, the pulse number threshold being b, and the preset step size being 1 as an example.

In the example, the process of generating the output clock signal of a variable clock frequency may comprise b stages, i.e., a 1-st stage, a 2-nd stage, a 3-rd stage, ···, a (b-1)-th stage, and a b-th stage. At the 1-st stage (wherein the number of pulses of the first clock signal reaches k pulses for the 1-st time, i.e., the 0-th pulse signal to the (k-1)-th pulse signal in the first clock signal produced by the clock signal source), one pulse signal in the output clock signal is generated every time the number of pulses of the first clock signal reaches b pulses. In this case, the clock frequency of the output clock signal is the second clock frequency.

At the 2-nd stage (wherein the number of pulses of the first clock signal reaches k pulses for the 2-nd time, i.e., a k-th pulse signal to a (2k-1)-th pulse signal in the first clock signal produced by the clock signal source), the pulse number threshold b is reduced by 1, to obtain an updated pulse number threshold (b-1), and one pulse signal in the output clock signal is generated every time the number of pulses of the first clock signal reaches (b-1) pulses.

At the 3-rd stage (wherein the number of pulses of the first clock signal reaches k for the 3-rd time, i.e., the 2k-th pulse signal to the (3k-1)-th pulse signal in the first clock signal produced by the clock signal source), the pulse number threshold (b-1) is reduced by 1, to obtain an updated pulse number threshold (b-2), and one pulse signal in the output clock signal is generated every time the number of pulses of the first clock signal reaches (b-2) pulses;

At the (b-1)-th stage (wherein the number of pulses of the first clock signal reaches k for the (b-1)-th time, i.e., the (b-2)k-th pulse signal to the ((b-1)k-1)-th pulse signal in the first clock signal produced by the clock signal source), the pulse number threshold (b=3) is reduced by 1, to obtain an updated pulse number threshold (b=2), and one pulse signal in the output clock signal is generated every time the number of pulses of the first clock signal reaches 2 pulses;

At the b-th stage (from the (b-1)k-th pulse signal in the first clock signal produced by the clock signal source till the end), the pulse number threshold (b=2) is reduced by 1, to obtain an updated pulse number threshold (b=1), and one pulse signal in the output clock signal is generated every time the number of pulses of the first clock signal reaches 1 pulse. In this case, the clock frequency of the output clock signal is the first clock frequency, i.e., the clock frequency of the output clock signal is same as the clock frequency of the first clock signal.

In some embodiments, the preset number of cycles k may be a multiple of the pulse number threshold b, or may not be a multiple of the pulse number threshold b. When the preset number of cycles k is not a multiple of the pulse number threshold b, the preset number of cycles k may be adjusted, such as to be a number closest to the preset number of cycles k and divisible by the pulse number threshold b.

For example, as shown in FIG. 2, the process of generating the output clock signal of a variable clock frequency is described taking the preset number of cycles k being 8, the pulse number threshold b being 4, and the preset step size being 1 as an example.

At the 1-st stage (the 0-th pulse signal to the 7-th pulse signal in the first clock signal produced by the clock signal source), one pulse signal in the output clock signal is generated every time the number of pulses of the first clock signal reaches 4 pulses.

At the 2-nd stage (wherein as the preset number of cycles 8 cannot be divided by the pulse number threshold 3, the preset number of cycles is adjusted to be 6, i.e., the 8-th pulse signal to the 13-th pulse signal in the first clock signal produced by the clock signal source), the pulse number threshold b is reduced to be 3, and one pulse signal in the output clock signal is generated every time the number of pulses of the first clock signal reaches 3 pulses.

At the 3-rd stage (the14-th pulse signal to the 21-st pulse signal in the first clock signal produced by the clock signal source), the pulse number threshold b is reduced to be 2, and one pulse signal in the output clock signal is generated every time the number of pulses of the first clock signal reaches 2 pulses.

At the 4-th stage (starting from the 21-st pulse signal in the first clock signal produced by the clock signal source till the end), the pulse number threshold b is reduced to be 1, and one pulse signal in the output clock signal is generated every time the number of pulses of the first clock signal reaches 1 pulse. In this case, the clock frequency of the output clock signal is the first clock frequency, i.e., the clock frequency of the output clock signal is same as the clock frequency of the first clock signal.

In some embodiments, the clock signal generating module 110 may comprise a comparator, a selector, and a counter. A specific structure of a circuit of the clock signal generating module is described below with an example.

In some examples, as shown in FIG. 3, the clock signal generating module 110 comprises a signal converting unit 111 and a logic device 112.

The signal converting unit 111 is configured to adjust the first clock frequency of the first clock signal, to obtain a second clock signal.

Illustratively, the clock frequency of the second clock signal comprises the second clock frequency. In some examples, the clock frequency of the second clock signal does not change, and is always the second clock frequency. In some other examples, the clock frequency of the second clock signal is variable, and the clock frequency of the second clock signal may increase gradually from the second clock frequency to the first clock frequency. For description about the clock frequency of the second clock signal, one may refer to a foregoing embodiment, which is not repeated here.

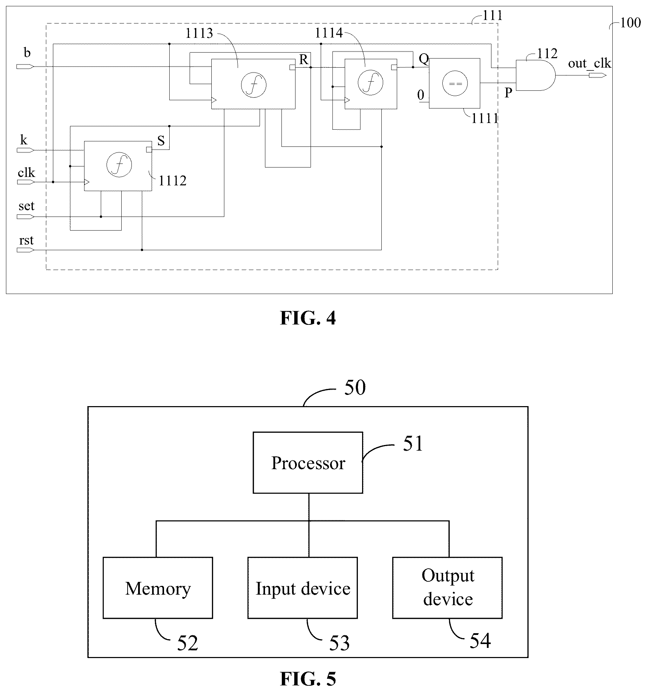

In some examples, as shown in FIG. 4, the signal converting unit 111 comprises a comparator 1111 and a plurality of counters. The plurality of counters may be configured to count a number of pulses of the first clock signal, to obtain an output number.

As shown in FIG. 4, the plurality of counters comprises a first counter 1112, a second counter 1113, and a third counter 1114.

The first counter 1112 is configured to count, based on a preset number of cycles, the number of pulses of the first clock signal to obtain a first count.

Illustratively, the first count obtained by the first counter 1112 is related to the preset number of cycles. An initial value for the first counter 1112 may be 0, and may also be a number related to the preset number of cycles. When the initial value for the first counter 1112 is 0, the first counter 1112 is configured to count up. When the initial value for the first counter 1112 is a number related to the preset number of cycles, the first counter 1112 is configured to count down. This is not limited in this disclosure, and an embodiment below is illustrated taking the initial value for the first counter 1112 being a number related to the preset number of cycles as an example.

For example, taking the preset number of cycles being k and the initial value for the first counter 1112 being k-1 as an example, the first counter 1112 is configured to count the number of pulses of the first clock signal, reducing the first count obtained by the first counter 1112 by 1 upon arrival of a rising edge of a pulse signal of the first clock signal, until the first count is reduced to 0, and then restarting the counting from the initial value k-1.

The second counter 1113 is configured to, in response to the first count not reaching the first number, output a second number; and in response to the first count reaching the first number, update the second number based on a preset step size, to obtain an updated second number.

Illustratively, the first count not reaching the first number denotes that the number of pulses of the first clock signal does not reach the preset number of cycles k. The first count reaching the first number denotes that the number of pulses of the first clock signal reaches the preset number of cycles k. The first number may be 0, and may also be a number related to the preset number of cycles. When the first counter 1112 counts up, the first number is a number related to the preset number of cycles. When the first counter 1112 counts down, the first number is 0, which is, when the first count is reduced from k-1 to the first number 0, it denotes that the number of pulses of the first clock signal reaches the preset number of cycles k.

The second number is related to the pulse number threshold (b). The pulse number threshold denotes that one pulse signal in the output clock signal may be generated for b pulse signals produced by the first clock signal. The pulse number threshold may be updated once every time the number of pulses of the first clock signal reaches k pulses.

Illustratively, every time the number of pulses of the first clock signal reaches k pulses, the pulse number threshold may be reduced from b by the preset step size, and when the pulse number threshold is reduced to 1, the clock frequency of the output clock signal is same as the clock frequency of the first clock signal.

For example, the second number is the pulse number threshold minus 1, wherein when the pulse number threshold is b, the second number is b-1; and when the updated pulse number threshold is b-1, the second number is b-2.

As shown in FIG. 4, taking the first number being 0, the second number being b-1, and the preset step size being 1 as an example, in case the first count S obtained by the first counter 1112 has not reached 0 (i.e., the number of pulses of the first clock signal has not reached k pulses), the second counter 1113 outputs the second number b-1 (i.e., in FIG. 4 the output value R of the second counter 1113 is b-1). When the count S of the first counter 1112 reaches 0 for the first time (i.e., the number of pulses of the first clock signal reaches k pulses for the first time), the second counter 1113 updates, based on the preset step size 1, the second number to b-2 (i.e., in FIG. 4 the output value R of the second counter 1113 is b-2).

When the first count S obtained by the first counter 1112 reaches 0 for the first time, the first counter 1112 restarts counting, and when the first count S obtained by the first counter 1112 reaches 0 for the second time (i.e., the number of pulses of the first clock signal reaches k pulses for the second time), the second counter 1113 updates, based on the preset step size 1, the second number to b-3 (i.e., in FIG. 4 the output value R of the second counter 1113 is b-3); and so on, which enables to adjust the clock frequency of the first clock signal once every k pulses.

The third counter 1114 is configured to count, based on the second number or the updated second number, the number of pulses of the first clock signal, to obtain the output number.

Illustratively, when the third counter 1114 counts up, the third counter 1114 counts starting from 0, and when the third counter 1114 counts to the output value of the second counter, the third counter 1114 restarts counting from 0. When the third counter 1114 counts down, the initial value for the third counter 1114 is the output value of the second counter, the third counter 1114 starts counting from the output value of the second counter, and when the third counter 1114 counts to 0, the third counter 1114 restarts counting from the output value of the second counter.

For example, taking that the third counter counts down as an example, as shown in FIG. 4, when the output value R of the second counter 1113 is b-1, the third counter 1114 is configured to count the number of pulses of the first clock signal, and obtaining the output number (outputting a count Q), wherein the count Q reduces in sequence from b-1 to 0, and when the count Q output by the third counter 1114 is 0, it denotes that the number of pulses of the first clock signal reaches b pulses. When the output value R of the second counter 1113 is b-2, the third counter 1114 is configured to count the number of pulses of the first clock signal, and outputting a count Q, wherein the count Q reduces in sequence from b-2 to 0, and when the count Q output by the third counter 1114 is 0, it denotes that the number of pulses of the first clock signal reaches b-1 pulse.

The comparator 1111 is configured to compare the output number of the third counter 1114 with a preset number to obtain the second clock signal.

Illustratively, the output number of the third counter 1114 is the count output by the third counter 1114. In case the third counter of the output number is same as the preset number, the comparator outputs a high level signal, and in case the third counter of the output number differs from the preset number, the comparator outputs a low level signal.

For example, taking the preset number being 0, the second number being b-1, and the initial value for the third counter 1114 being b-1 as an example, when the output number of the third counter 1114 (the count output by the third counter 1114) has not reached 0, the comparator 1111 compares the output number with the preset number and then outputs a low level. When the output number of the third counter 1114 (the count output by the third counter 1114) reaches 0, the comparator 1111 compares the output number with the preset number and then outputs a high level.

The logic device 112 is configured to perform logic operation on the first clock signal and the second clock signal, to obtain the output clock signal.

Illustratively, the logic device 112 may be a logic AND device. The logic device 112 may be configured to perform logic AND operation on the first clock signal and the second clock signal, to obtain the output clock signal.

For example, as shown in FIG. 4, when the output number of the third counter 1114 (the count Q) has not reached 0, as the second clock signal output by the comparator 1111 (signal P) has a low level, the output clock signal obtained by the logic device 112 is also low level. When the output number of the third counter 1114 (the count Q) reaches 0, as the second clock signal output by the comparator 1111 (signal P) has a high level, and the first clock signal is also high level, the output clock signal obtained by the logic device 112 is high level. This therefore enables to generate one pulse signal in the output clock signal when the number of pulses of the first clock signal reaches the pulse number threshold. Moreover, updating the second number by the second counter 1113 enables the clock frequency of the output clock signal to increase gradually.

As shown in FIG. 4, when the set signal is high level, the initial value for the first counter 1112 is set to k-1, and an initial value for the second counter 1113 is set to b-1.

The first counter 1112 starts counting from k-1, and when the first count S obtained by the first counter 1112 has not reached 0, the output value R of the second counter 1113 is always b-1. The third counter 1114 starts counting from b-1, and when the count Q output by the third counter 1114 is 0, the comparator 1111 outputs high level, and the logic device 112 also outputs high level. When the count Q output by the third counter 1114 is 0, the third counter 1114 restarts counting from b-1, and when the count Q output by the third counter 1114 is 0 again, the comparator 1111 outputs high level, and the logic device 112 also outputs high level. That is, one pulse signal in the output clock signal is generated for every other b pulses in the first group of k pulses produced by the clock signal source 130, thereby ensuring the clock frequency of the output clock signal to be lower than the clock frequency of the first clock signal.

When the first count S obtained by the first counter 1112 reaches 0 for the first time, the second counter 1113 updates, based on the preset step size 1, the second number to b-2. The third counter 1114 starts counting from b-2, and when the count Q output by the third counter 1114 is 0, the comparator 1111 outputs high level, and the logic device 112 also outputs high level. That is, when the clock signal source 130 produces a second group of k pulses, one pulse signal in the output clock signal is generated for every other (b-1) pulses in the second group of k pulses. When the first count S obtained by the first counter 1112 reaches 0 for the second time, the second counter 1113 updates, based on the preset step size 1, the second number to b-3. The third counter 1114 starts counting from b-3, and when the count Q output by the third counter 1114 is 0, the comparator 1111 outputs high level, and the logic device 112 also outputs high level. That is, when the clock signal source 130 produces a third group of k pulses, one pulse signal in the output clock signal is generated for every other (b-2) pulses in the third group of k pulses. Therefore, by updating the second number, this disclosure enables to adjust the clock frequency of the first clock signal once every k pulses, such that the clock frequency of the output clock signal increases gradually.

To solve the problem that when the state of the BPU changes from the nonoperating state to the operating state, power consumption of the BPU may increase suddenly, causing an error in the operation result of the BPU, and even internal deadlock of the BPU, embodiments of this disclosure further provides an instruction generation method for a neural network processor, wherein in the method, by determining, in a first instruction sequence corresponding to a neural network model to be processed by a neural network processor, a first instruction executed by a first hardware unit which has power consumption greater than a power consumption threshold, and generating a second instruction having an input data address and an output data address that are the same as those of the first instruction, to insert the second instruction in the first instruction sequence, to obtain a second instruction sequence executable by the neural network processor, a runtime-side device is enabled, in executing the second instruction sequence, to repeat execution of the first instruction and the second instruction having the same input data address and output data address, which enables to prevent impact of drop of voltage of the neural network processor due to great power consumption of a first hardware unit corresponding to an instruction executed first on correctness of an operation result, and then can reduce impact of change of the voltage of performance of the neural network processor, guaranteeing that the operation result of the neural network processor is correct.

### Illustrative device

An instruction generation method and an instruction execution method according to embodiments of this disclosure are applicable to a compilation-side device and a runtime-side device, respectively, wherein the compilation-side device is configured for generating instructions executable by the neural network processor, and the runtime-side device is configured for executing neural network operations by running the instructions provided by the compilation-side device, wherein these operations comprise but are not limited to a convolution operation, a pooling operation, an activation function operation, etc.

In some embodiments, the compilation-side device may comprise but is not limited to a personal computer, a server computer, a multi-processor system, a microprocessor-based system, etc.

In some embodiments, the runtime-side device may comprise but is not limited to a neural network processor or a neural network chip, etc.

FIG. 5 is a diagram of a structure of an electronic device 50 according to embodiments of this disclosure, the electronic device 50 may be configured for implementing a function of the compilation-side device, and as shown in FIG. 5, the electronic device 50 comprises at least one processor 51 and a memory 52.

The processor 51 is configured to perform an instruction generation method for the neural network processor to perform a pooling operation in embodiments of this disclosure, and the processor 51 may be a processor supporting neural network instruction sequence compilation, such as a central processing unit (CPU), a graphics processing unit (GPU), etc., of powerful performance, or a processing unit of another form capable of compilation processing and / or executing instructions.

The memory 52 may comprise one or more computer program products, which may comprise various forms of computer-readable storage media, such as a transitory memory and/or a non-transitory memory. The transitory memory may comprise, for example, random-access memory (RAM) and/or cache. The non-transitory memory may comprise, for example, read-only memory (ROM), hard disk, flash memory, etc. One or more computer program instructions may be stored on the computer-readable storage medium. The processor 51 may execute one or more of the program instructions to implement the instruction generation method for the neural network processor to perform a pooling operation hereinafter.

In some embodiments, as shown in FIG. 5, the electronic device 50 may further comprise an input device 53 and an output device 54. The input device 53 may comprise, for example, a keyboard, a mouse, etc., which may allow a compiler person to input a parameter of a neural network, such as the size of the input feature map, the size of the output feature map, the convolution kernel, etc., of each layer of the neural network. The output device 54 may comprise, for example, a display, a speaker, a printer, a communication network and a remote output device connected to the communication network, etc., which may allow the compiler person to check a final result of compilation or intermediate data during compilation, etc.

Note that the specific structure of the electronic device 50 is not limited in embodiments of this disclosure, and the electronic device 50 may comprise more or less components than as shown in FIG. 5. For example, the electronic device 50 may further comprise a component such as a bus, an input/output interface, etc.

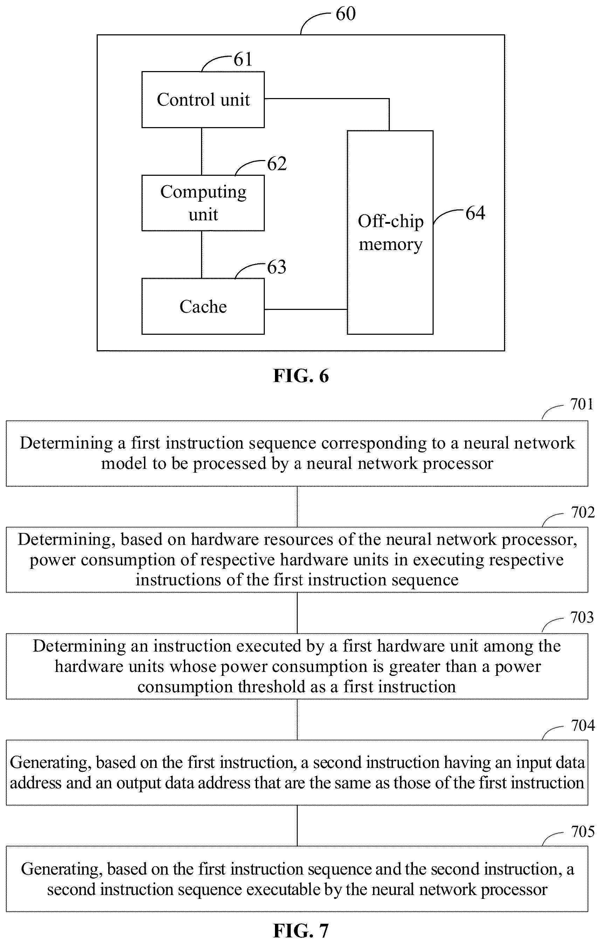

FIG. 6 is a diagram of a structure of an electronic device 60 according to embodiments of this disclosure, the electronic device 60 may be configured for implementing a function of the runtime-side device, and as shown in FIG. 6, the electronic device 60 may comprise a control unit 61 and a computing unit 62, wherein the control unit 61 is configured for running instructions to control the computing unit 62 to implement an instruction generation method for the neural network processor to process feature data below.

The control unit 61 may comprise one or a plurality of processors or processing units of other forms capable of neural network operation capability and / or executing instructions. Such a processor may comprise but is not limited to a processor supporting neural-network-related computation such as a GPU, a brain processing unit (BPU), a tensor processing unit (TPU), etc. In some embodiments, the control unit 61 is configured for controlling the computing unit 62 to execute a respective operation based on instructions (such as the instructions for convolution operation, addition operation, subtraction operation, saturation operation, and activation operation) executable by the neural network processor.

The computing unit 62 comprises an operation circuit, wherein the operation circuit may be configured to perform operation of the neural network, wherein the operation comprises but is not limited to instructions for any one or plurality of convolution operation, addition operation, subtraction operation, saturation operation, activation operation, etc.

In some embodiments, the electronic device 60 may further comprise a cache 63 and an off-chip memory 64. The cache 63 may comprise one or a plurality of standalone cach memories or processing units capable of data caching, and may be controlled by the control unit 61 to access the off-chip memory 64. In some embodiments, the cache 63 may be a fast, small-capacity static access memory, such as a static random access memory (SRAM). Illustratively, the cache 63 may be configured for receiving and caching convolution kernel data and / or at least part of input feature data from the off-chip memory 64 for use by the computing unit 62, and may further be configured for receiving and caching output feature data output by the computing unit 62, and outputting the output feature data to the off-chip memory 64.

The off-chip memory 64 may comprise one or a plurality of standalone memories or processing units capable of data storage, and may be controlled by the control unit 61 to be accessed by the cache 63. In some embodiments, the off-chip memory 64 is a slow, large-capacity dynamic access memory, such as a dynamic random access memory (DRAM). In some embodiments, the off-chip memory 64 is of a double data rate (DDR).

Note that the specific structure of the electronic device 60 is not limited in embodiments of this disclosure, and the electronic device 60 may comprise more or less components than as shown in FIG. 6. For example, the electronic device 60 may further comprise a component such as a bus.

A method according to embodiments of this disclosure is applicable to numerous fields wherein neural network computation is to be performed, such as image processing, intelligent driving, etc., wherein for example, by performing a method according to embodiments of this disclosure, image data may be processed in field of image processing.

### Illustrative method

FIG. 7 is a flowchart of an instruction generation method for a neural network processor according to an illustrative embodiment of this disclosure. The instruction generation method is applicable to a compilation-side device, and as shown in FIG. 7, comprises step 701 to step 705 as follows.

Step 701, Determining a first instruction sequence corresponding to a neural network model to be processed by a neural network processor

In some embodiments, the neural network model may be a model applied to a plurality of different fields such as natural language processing, computer vision, speech recognition, image processing, etc. In a plurality of fields, different neural network models may be designed based on a scene of application and an application need, and a scene of application and a model structure of the neural network model is not limited in embodiments of this disclosure.

Step 702, Determining, based on hardware resources of the neural network processor, power consumption of respective hardware units in executing respective instructions of the first instruction sequence

In some embodiments, the first instruction sequence comprises a plurality of instructions. The instructions may comprise but are not limited to instructions for any one or plurality of convolution operation, addition operation, subtraction operation, saturation operation, activation operation, etc.

Illustratively, the instructions in the first instruction sequence may be executed by different hardware units of the neural network processor. Power consumption of the hardware units of the neural network processor may differ. Power consumption of a hardware unit may be power consumption of the hardware unit running at full speed. For example, the instructions for addition operation are executed by an adder of the neural network processor.

Step 703, Determining an instruction executed by a first hardware unit among the hardware units whose power consumption is greater than a power consumption threshold as a first instruction

The first instruction may be an instruction which changes power consumption of the neural network processor greatly when the neural network processor processes the first instruction sequence. Illustratively, the first instruction may be determined based on sizes of power consumption of the hardware units in executing the respective instructions of the first instruction sequence. For example, power consumption of the respective hardware units in executing the instructions is compared with the power consumption threshold, respectively, a hardware unit which has power consumption greater than the power consumption threshold is determined as the first hardware unit, and the instruction executed by the first hardware unit is determined as the first instruction.

Step 704, Generating, based on the first instruction, a second instruction having an input data address and an output data address that are the same as those of the first instruction

The input address and the output address of the second instruction and those of the first instruction are the same, and the first instruction may be executed before the second instruction, or may be executed after the second instruction. As the input address and the output address of the second instruction and those of the first instruction are the same, regardless of the order of executing the first instruction and the second instruction, after execution of the first instruction and the second instruction, the operation result for the instruction executed first may be overwritten by the operation result for an instruction executed subsequently (such as the first instruction or the second instruction).

In some embodiments, the generating, based on the first instruction, a second instruction having an input data address and an output data address that are the same as those of the first instruction may comprise: determining the first instruction as the second instruction. That is, the second instruction is an instruction identical to the first instruction, wherein for example, the second instruction is the same as the first instruction in terms of the function, the computational load, and the input data address and the output data address.

When the second instruction is an instruction identical to the first instruction, the first instruction may be executed first, and the second instruction may be executed subsequently; or the second instruction may be executed first, and the first instruction may be executed subsequently. As the second instruction and the first instruction are identical, regardless of whether the first instruction or the second instruction is executed first, the operation result for the instruction executed first is bound to be overwritten by that for the instruction executed subsequently.

In some embodiments, the generating, based on the first instruction, a second instruction having an input data address and an output data address that are the same as those of the first instruction may comprise: generating, based on the first instruction, the second instruction that has a same function as the first instruction but a lower computational load than the first instruction.

In this embodiment, the second instruction has the same function as the first instruction, and the computational load for the second instruction is less than the computational load for the first instruction. The computational load for an instruction may denote the amount of data output when executing the instruction. The less the computational load for the instruction is, the less the operation time, and the less the amount of data output when executing the instruction; the greater the computational load for the instruction is, the greater the operation time, and the greater the amount of data output when executing the instruction. Therefore, generating the second instruction having less computational load enables to improve operation efficiency of the neural network processor.

Step 705, Generating, based on the first instruction sequence and the second instruction, a second instruction sequence executable by the neural network processor

Illustratively, the second instruction sequence executable by the neural network processor may be generated by inserting the second instruction in the first instruction sequence.

For example, when the second instruction and the first instruction are the same, the second instruction sequence executable by the neural network processor may be generated by inserting, before the first instruction in the first instruction sequence, the second instruction that is the same as the first instruction. Alternatively, the second instruction sequence executable by the neural network processor may be generated by inserting, after the first instruction in the first instruction sequence, the second instruction that is the same as the first instruction.

In some examples, when the second instruction and the first instruction are the same, when the neural network processor executes the second instruction sequence, the first hardware unit repeats execution of two same instructions (such as the first instruction and the second instruction). When the first hardware unit executes the first instruction, as the state of the neural network processor changes from the nonoperating state to the operating state, power consumption of the neural network processor may increase suddenly, causing an error in the operation result obtained by the first hardware unit by executing the first instruction. However, while the first hardware unit executes the first instruction, the PMIC may adjust the voltage of the neural network processor. When the first hardware unit executes the subsequent instruction, the neural network processor is always in the operating state, therefore, there is no sudden change in power consumption, and there is no significant drop in the voltage of the neural network processor, which therefore ensures that a result obtained by the first hardware unit by executing the subsequent instruction is correct. Moreover, in the first instruction and the second instruction, the operation result for the instruction executed first may be overwritten by the operation result for the instruction executed subsequently, which therefore ensures obtaining the correct operation result when the neural network processor repeats execution of two same instructions.

For example, a process of executing the second instruction sequence is described taking that the second instruction is the same as the first instruction and that the second instruction is inserted after the first instruction in the first instruction sequence as an example. When the neural network processor executes the second instruction sequence, when the first hardware unit starts to execute the first instruction, great power consumption of the first hardware unit causes a great power consumption change rate of the neural network processor, and drop of the operating voltage of the neural network processor, causing an error in the operation result obtained by the first hardware unit by executing the first instruction. Having executed the first instruction, the first hardware unit continues to execute the second instruction that is the same as the first instruction. When the neural network processor executes the second instruction, the neural network processor repeats execution of the instruction that is the same as the first instruction, in which case, there is no clear change in power consumption of the first hardware unit, the power consumption change rate of the neural network processor is small, and the operating voltage of the neural network processor is stable, which guarantees that the operation result obtained by the first hardware unit by executing the second instruction is correct. In addition, as the input data address and the output data address of the second instruction and those of the first instruction are the same, the operation result for the first instruction executed first may be overwritten by the operation result for the second instruction executed subsequently, which then ensures that the operation result of the neural network processor is correct.

When the second instruction is an instruction that has a same function as the first instruction but a lower computational load than the first instruction, generating the second instruction sequence executable by the neural network processor by inserting the second instruction in the first instruction sequence may comprise: inserting the second instruction before the first instruction in the first instruction sequence, to generate the second instruction sequence executable by the neural network processor.

Illustratively, taking that the second instruction is an instruction that has a same function as the first instruction but a lower computational load than the first instruction as an example, when the neural network processor executes the second instruction sequence, the first hardware unit executes the second instruction first, great power consumption of the first hardware unit causes a great power consumption change rate of the neural network processor, and drop of the operating voltage of the neural network processor, causing an error in the operation result obtained by the first hardware unit by executing the second instruction. However, while the first hardware unit executes the second instruction, the PMIC may adjust the voltage of the neural network processor. Therefore, having executed the second instruction, when the first hardware unit continues to execute the first instruction, the neural network processor is always in the operating state, therefore, there is no clear change in power consumption of the first hardware unit, the power consumption change rate of the neural network processor is small, and the operating voltage of the neural network processor is stable, which guarantees that the operation result obtained by the first hardware unit by executing the first instruction is correct. Moreover, as the input data address and the output data address of the first instruction and those of the second instruction are the same, the operation result for the second instruction executed first may be overwritten by the operation result for the first instruction executed subsequently, which then ensures that the operation result of the neural network processor is correct. In addition, as the computational load for the second instruction executed first is less than the computational load for the first instruction, it is therefore enabled to improve operation efficiency of the neural network processor and improve performance of operation of the neural network processor while ensuring that a result output by the neural network processor is correct.

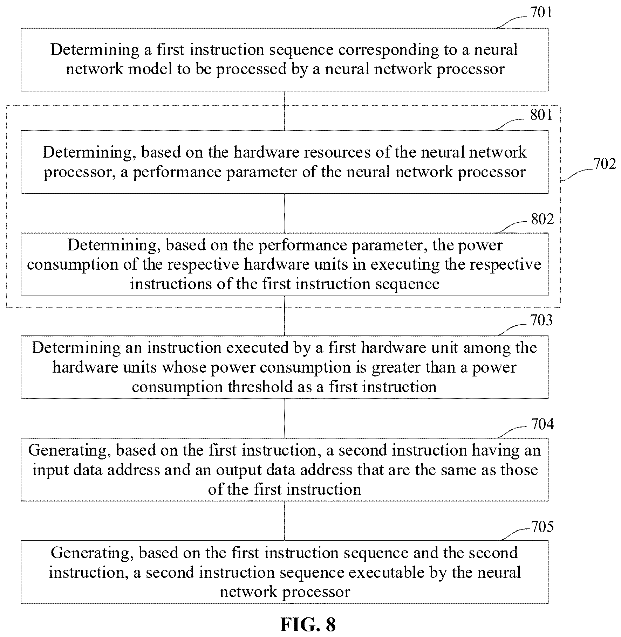

In some embodiments, as shown in FIG. 8, step 702 may further comprise step 801 to step 802.

Step 801, Determining, based on the hardware resources of the neural network processor, a performance parameter of the neural network processor

The performance parameter of the neural network processor is configured for evaluating the performance of the neural network processor. The better the performance of neural network processor is, the lower the minimum operating voltage for the neural network processor to operate stably, and the higher the operation frequency supported by the neural network processor. The poorer the performance of the neural network processor is, the higher the minimum operating voltage for the neural network processor to operate stably, and the lower the operation frequency supported by the neural network processor.

Illustratively, the performance parameter of the neural network processor may comprise the location of a wafer for manufacturing the neural network processor, process corners for the wafer for manufacturing the neural network processor, a speed of a transistor of the neural network processor. Illustratively, the performance parameter of the neural network processor may comprise a highest operation frequency and the minimum operating voltage for the neural network processor to operate stably.

Step 802, Determining, based on the performance parameter, the power consumption of the respective hardware units in executing the respective instructions of the first instruction sequence

Illustratively, in case the performance parameter of the neural network processor is determined, it is determined, based on the performance parameter of the neural network processor, whether the performance of the neural network processor is poor. In case the performance parameter of the neural network processor indicates that the performance of the neural network processor is poor, as the minimum operating voltage for the neural network processor is high, when the state of the neural network processor changes from the nonoperating state to the operating state, the operating voltage drop of the neural network processor is great, and the dropped voltage may be lower than the minimum operating voltage, causing an error in the operation result of the neural network processor. Therefore, in case the performance parameter of the neural network processor indicates that the performance of the neural network processor is poor, the power consumption of the respective hardware units in executing the respective instructions of the first instruction sequence is to be determined, and a second instruction corresponding to a first instruction executed by a first hardware unit which has high power consumption is to be inserted in the first instruction sequence, to ensure that there is no error in the operation result of the neural network processor of poor performance.

In case the performance parameter of the neural network processor indicates that the performance of the neural network processor is good, as the minimum operating voltage for the neural network processor is low, when the state of the neural network processor changes from the nonoperating state to the operating state, even if the operating voltage of the neural network processor drops, it has no impact on the operation result of the neural network processor, and therefore, the steps of determining the power consumption of the respective hardware units in executing the respective instructions of the first instruction sequence and inserting the second instruction in the first instruction sequence are not required to be performed; rather, it will suffice to directly output the first instruction sequence.

With the instruction generation method according to embodiments of this disclosure, after the determining a first instruction sequence corresponding to a neural network model to be processed by a neural network processor, the performance parameter of the neural network processor may be determined, to determine, in case the performance parameter of the neural network processor does not meet a requirement, the power consumption of the respective hardware units in executing the respective instructions of the first instruction sequence, and to insert the second instruction in the first instruction sequence, to generate the second instruction sequence, to ensure that there is no error in the operation result of the neural network processor. In case the performance parameter of the neural network processor meets the requirement, it will suffice to directly output the first instruction sequence. That is, embodiments of this disclosure enable to determine respective instruction sequences for neural network processors of different performance, enabling to improve operation efficiency of a neural network processor while ensuring that the operation result of the neural network processor is correct.

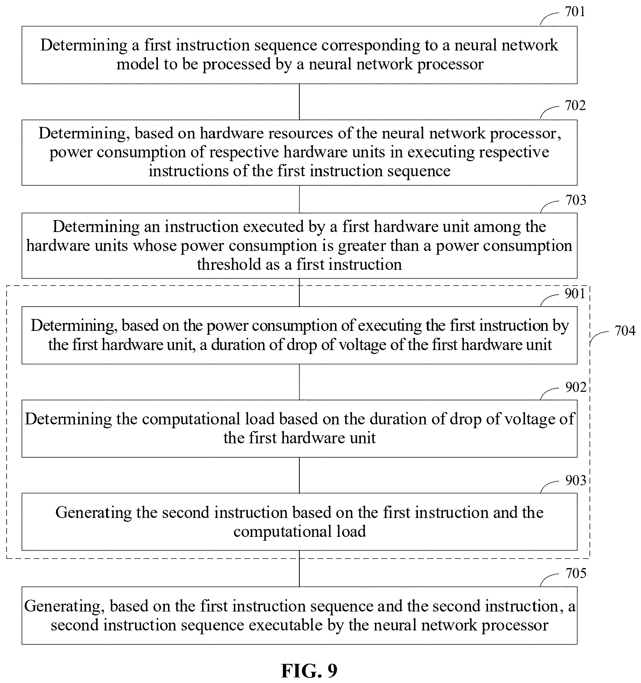

In some embodiments, as shown in FIG. 9, step 704 comprises step 901 to step 903.

Step 901, Determining, based on the power consumption of executing the first instruction by the first hardware unit, a duration of drop of voltage of the first hardware unit

When the first hardware unit of the neural network processor starts to execute the first instruction, great power consumption of the first hardware unit causes power consumption of the neural network processor to increase suddenly, causing the voltage of the neural network processor to drop quickly. After that, the voltage of the neural network processor returns to normal through adjustment by the PMIC. In view of this, the duration of drop of voltage of the first hardware unit may be a duration of dropping of voltage of the neural network processor caused by executing the first instruction by the first hardware unit. For example, the duration of drop of voltage of the first hardware unit is 10 µs.

Illustratively, the duration of drop of voltage of the first hardware unit is proportional to the power consumption of executing the first instruction by the first hardware unit, wherein the greater the power consumption of executing the first instruction by the first hardware unit is, the greater the duration of drop of voltage of the first hardware unit; and the less the power consumption of executing the first instruction by the first hardware unit is, the less the duration of drop of voltage of the first hardware unit. Therefore, the duration of drop of voltage of the first hardware unit may be determined in advance, and a correspondence between the duration of drop of voltage of the first hardware unit and the power consumption of executing the first instruction by the first hardware unit may be stored, such that when determining power consumption of the first hardware unit, the duration of drop of voltage of the first hardware unit may be determined based on the correspondence.

Step 902, Determining the computational load based on the duration of drop of voltage of the first hardware unit

Illustratively, step 902 may comprise: first, determining a total duration required for the first hardware unit to execute the first instruction; then, determining a ratio of the duration of drop of voltage of the first hardware unit to the total duration; and finally, determining the computational load based on the ratio of the duration of drop of voltage of the first hardware unit to the total duration and a total computational load of executing the first instruction by the first hardware unit.

For example, taking that the duration of drop of voltage of the first hardware unit is 10 µs and that the total duration required for the first hardware unit to execute the first instruction is 100 µs as an example, the computational load for the second instruction is 10% of the computational load for the first instruction, i.e., first 10% of data of the second instruction are output.

Step 903, Generating the second instruction based on the first instruction and the computational load

When generating the second instruction, the duration of drop of voltage of the first hardware unit may be determined, and the computational load for the second instruction may be determined based on the duration of drop of voltage of the first hardware unit; based on which, the first hardware unit executes the second instruction based on the computational load, which guarantees that the PMIC can adjust the voltage of the neural network processor in time, while reducing the amount of operation, improving runtime efficiency, saving resources.

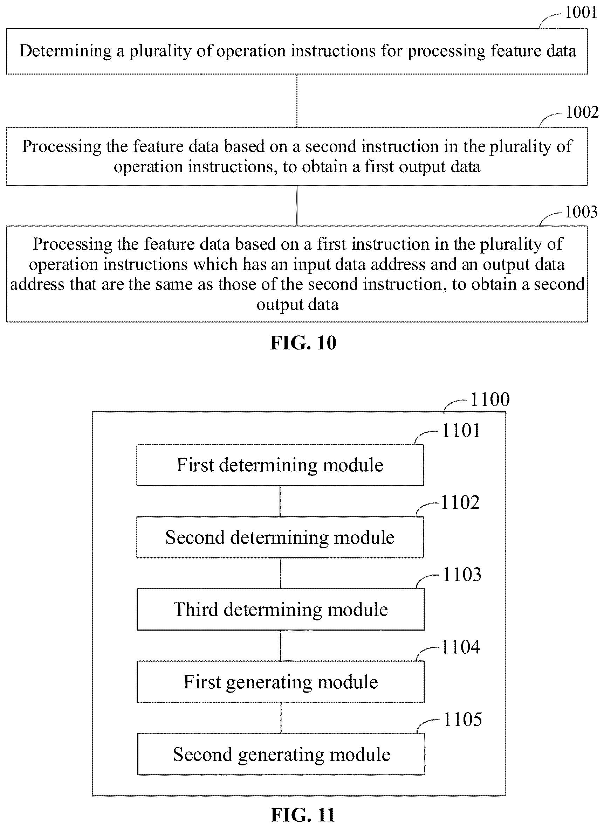

FIG. 10 is a flowchart of an instruction execution method for a neural network processor according to an illustrative embodiment of this disclosure, wherein the instruction execution method is applicable to a runtime-side device, and as shown in FIG. 10, comprises step 1001 to step 1003 as follows.

Step 1001, Determining a plurality of operation instructions for processing feature data

The plurality of operation instructions comprise a first instruction and a second instruction, wherein the input address and the output address of the first instruction and those of the second instruction are the same; the first instruction is one of the plurality of operation instructions which is executed by one of respective hardware units for the respective instructions, wherein the hardware unit has power consumption greater than a power consumption threshold; and the second instruction is an instruction generated based on the first instruction.

Different hardware units in the neural network processor may execute different instructions. For example, an adder in the neural network processor may execute instructions for addition operation. When different hardware units in the neural network processor execute the instructions, the different hardware units in the neural network processor may have different power consumption. When a hardware unit in the neural network processor executes an instruction, if power consumption of the hardware unit changes greatly, there may be a clear drop in the operating voltage of the neural network processor, causing an error in an operation result obtained by the hardware unit having great power consumption by executing the instruction. Therefore, to guarantee that there is no error in the operation result obtained by the hardware unit having great power consumption in the neural network processor, after a first instruction sequence corresponding to a neural network model to be processed by the neural network processor has been determined, power consumption of respective hardware units in executing respective instructions of the first instruction sequence is determined based on hardware resources of the neural network processor, and the instruction executed by the first hardware unit among the hardware units whose power consumption is greater than the power consumption threshold is determined as the first instruction based on the power consumption of the respective hardware units in executing the respective instructions. That is, the first instruction in the first instruction sequence which may cause power consumption of the neural network processor to change greatly is determined based on the hardware resources of the neural network processor. After the first instruction in the first instruction sequence has been determined, the second instruction may be generated based on the first instruction, and the second instruction may be inserted before the first instruction in the first instruction sequence, to obtain the second instruction sequence, to obtain the plurality of operation instructions comprising the first instruction and the second instruction.

In some examples, the second instruction is an instruction identical to the first instruction, wherein for example, the second instruction is the same as the first instruction in terms of the function, the computational load, and the input data address and the output data address.

In case the second instruction is an instruction identical to the first instruction, after the first instruction in the first instruction sequence which may cause power consumption of the neural network processor to change greatly has been determined, the first instruction is determined as the second instruction, to obtain the second instruction identical to the first instruction. After the second instruction has been obtained, the second instruction is inserted before the first instruction in the first instruction sequence, to obtain the second instruction sequence, to obtain the plurality of operation instructions comprising the first instruction and the second instruction. Therefore, when the neural network processor executes the plurality of operation instructions comprising the first instruction and the second instruction, the neural network processor may execute the second instruction first, execute the first instruction subsequently, and in this way, the operation result for the second instruction executed first may be overwritten by the operation result for the first instruction executed subsequently. That is, the operation result for the second instruction executed first has no impact on the operation result for the first instruction executed subsequently, which then guarantees obtaining a correct operation result for the first instruction.

In some examples, the second instruction is an instruction that has the same function as the first instruction but the lower computational load than the first instruction.

In case the second instruction is an instruction that has the same function as the first instruction but the lower computational load than the first instruction, after the first instruction in the first instruction sequence which may cause power consumption of the neural network processor to change greatly has been determined, the duration of drop of voltage of the first hardware unit is determined based on the power consumption of executing the first instruction by the first hardware unit, the computational load is determined based on the duration of drop of voltage of the first hardware unit; and the second instruction is generated based on the first instruction and the computational load, i.e., to obtain the second instruction that has a same function as the first instruction but a lower computational load than the first instruction.

After the second instruction has been obtained, the second instruction is inserted before the first instruction in the first instruction sequence, to obtain the second instruction sequence, to obtain the plurality of operation instructions comprising the first instruction and the second instruction. Therefore, when the neural network processor executes the plurality of operation instructions comprising the first instruction and the second instruction, the neural network processor may execute the second instruction first, execute the first instruction subsequently, and in this way, the operation result for the second instruction executed first may be overwritten by the operation result for the first instruction executed subsequently. That is, the operation result for the second instruction executed first has no impact on the operation result for the first instruction executed subsequently, which then guarantees obtaining a correct operation result for the first instruction. Furthermore, the small computational load for the second instruction executed first can reduce the amount of operation, improving runtime efficiency.

Note that for a specific mode of generating the second instruction, one may refer to implementation of generating the second instruction in embodiments shown FIG. 7 and FIG. 8, which are not repeated here in this disclosure.

Step 1002, Processing the feature data based on a second instruction in the plurality of operation instructions, to obtain a first output data

When the neural network processor executes the plurality of operation instructions comprising the first instruction and the second instruction, the neural network processor may execute the second instruction first, to obtain the first output data. Although the power consumption change rate of the neural network processor in executing the second instruction is great, causing drop of the operating voltage of the neural network processor, impacting correctness of the first output data, while the neural network processor executes the second instruction, the PMIC may adjust the voltage of the neural network processor. In this way, when the neural network processor executes the subsequent first instruction, there is no sudden change in power consumption of the neural network processor, which guarantees correctness of the second output data corresponding to the first instruction executed subsequently.

Step 1003, Processing the feature data based on a first instruction in the plurality of operation instructions which has an input data address and an output data address that are the same as those of the second instruction, to obtain a second output data

After the neural network processor has executed the second instruction, the neural network processor executes the subsequent first instruction, to obtain the second output data. As the neural network processor executes the second instruction first before executing the first instruction, and therefore, while the neural network processor executes the second instruction, the PMIC may adjust the voltage of the neural network processor. In this way, when the neural network processor executes the subsequent first instruction, there is no sudden change in power consumption of the neural network processor, which guarantees correctness of the second output data corresponding to the first instruction executed subsequently. Moreover, as the input address and the output address of the first instruction executed subsequently and those of the second instruction executed first are the same, the first output data corresponding the second instruction executed first may be overwritten by the second output data corresponding to the first instruction executed subsequently, then obtaining the correct second output data.

When executing a plurality of operation instructions, a runtime-side device (such as a neural network processor) executes a second instruction and a first instruction in sequence. Feature data are processed based on the second instruction in the plurality of operation instructions, to obtain a first output data. However, the power consumption change rate of the runtime-side device is great, causing drop of the operating voltage of the runtime-side device, impacting correctness of the first output data. After that, the feature data are processed based on a first instruction in the plurality of operation instructions which has an input data address and an output data address that are the same as those of the second instruction, to obtain a second output data, in which case, there is no clear change in power consumption of the runtime-side device, the power consumption change rate of the runtime-side device is small, and the operating voltage of the runtime-side device is stable, which guarantees the correct second output data. In addition, as the input data address and the output data address of the first instruction and those of the second instruction are the same, the first output data may be overwritten by the second output data, to obtain the correct operation result.

With the instruction execution method according to this disclosure, in executing the second instruction sequence, a runtime-side device repeats execution of the first instruction and the second instruction having the same input data address and output data address, the operating voltage of the neural network processor in executing the subsequent instruction is stable, and the operation result for the instruction executed first may be overwritten by the operation result for the instruction executed subsequently, which therefore ensures that an execution result of the runtime-side device is correct.

### Illustrative apparatus

FIG. 11 is a diagram of a structure of an instruction generation apparatus for a neural network processor according to an illustrative embodiment of this disclosure. As shown in FIG. 11, the apparatus 1100 for generating instructions for a neural network processor comprises a first determining module 1101, a second determining module 1102, a third determining module 1103, a first generating module 1104, and a second generating module 1105.

The first determining module 1101 may be configured to determine a first instruction sequence corresponding to a neural network model to be processed by a neural network processor; the second determining module 1102 may be configured to determine, based on hardware resources of the neural network processor, power consumption of respective hardware units in executing respective instructions of the first instruction sequence; the third determining module 1103 may be configured to determine an instruction executed by a first hardware unit among the hardware units whose power consumption is greater than a power consumption threshold as a first instruction; the first generating module 1104 may be configured for generating, based on the first instruction, a second instruction having an input data address and an output data address that are the same as those of the first instruction; and the second generating module 1105 may be configured for generating, based on the first instruction sequence and the second instruction, a second instruction sequence executable by the neural network processor.

In some embodiments, the first generating module 1104 is specifically configured for: determining the first instruction as the second instruction; or generating, based on the first instruction, the second instruction that has a same function as the first instruction but a lower computational load than the first instruction.

In some embodiments, the first generating module 1104 comprises: a first determining unit, configured to determine, based on the power consumption of executing the first instruction by the first hardware unit, a duration of drop of voltage of the first hardware unit; a second determining unit, configured to determine the computational load based on the duration of drop of voltage of the first hardware unit; and a generating unit, configured for generating the second instruction based on the first instruction and the computational load.

In some embodiments, the second generating module 1105 is specifically configured for inserting, in the first instruction sequence, the second instruction that is the same as the first instruction, to generate the second instruction sequence executable by the neural network processor.

In some embodiments, the second generating module 1105 is specifically configured for inserting, before the first instruction in the first instruction sequence, the second instruction that has a same function as the first instruction but a lower computational load than the first instruction, to generate the second instruction sequence executable by the neural network processor.

In some embodiments, the second determining module 1102 is specifically configured for: determining, based on the hardware resources of the neural network processor, a performance parameter of the neural network processor; and determining, based on the performance parameter, the power consumption of the respective hardware units in executing the respective instructions of the first instruction sequence.

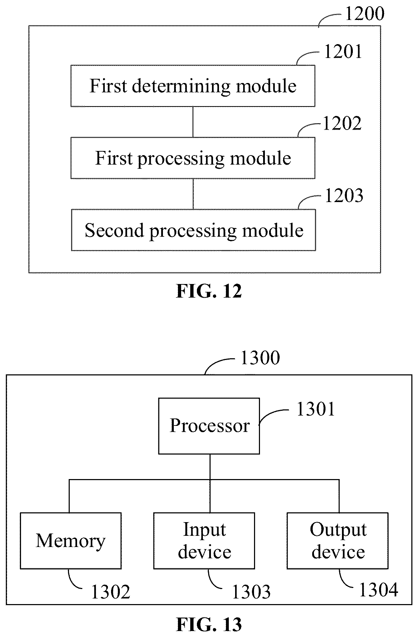

FIG. 12 is a diagram of a structure of an instruction execution apparatus for a neural network processor according to an illustrative embodiment of this disclosure. As shown in FIG. 12, the apparatus 1200 for executing instructions for a neural network processor comprises a first determining module 1201, a first processing module 1202, and a second processing module 1203.

The first determining module 1201 may be configured to determine a plurality of operation instructions for processing feature data; the first processing module 1202 may be configured for processing the feature data based on a second instruction in the plurality of operation instructions, to obtain a first output data; and the second processing module 1203 may be configured for processing the feature data based on a first instruction in the plurality of operation instructions which has an input data address and an output data address that are the same as those of the second instruction, to obtain a second output data.

In some embodiments, the second instruction is an instruction that is the same as the first instruction, or the second instruction is an instruction that has the same function as the first instruction but the lower computational load than the first instruction.

### Illustrative electronic device

FIG. 13 is a diagram of a structure of an electronic device according to embodiments of this disclosure, wherein as shown in FIG. 13, the electronic device 1300 comprises one or a plurality of processors 1301 and memory 1302.

The processor 1301 may be a central processing unit (CPU) or another form of processing unit having a data processing capability and/or an instruction execution capability, and may control other components in the electronic device 1300 to implement desired functions.

The memory 1302 may comprise one or more computer program products, which may comprise various forms of computer-readable storage media, such as a transitory memory and/or a non-transitory memory. The transitory memory may comprise, for example, random access memory (RAM) and/or cache. The non-transitory memory may comprise, for example, read-only memory (ROM), hard disk, flash memory, etc. One or more computer program instructions may be stored on the computer-readable storage medium. The processor 1301 may execute one or more of the program instructions to implement the instruction generation method and/or the instruction execution method according to the various embodiments of this disclosure that are described above and/or other desired functions.

In an example, the electronic device 1300 may further comprise an input device 1303 and an output device 1304. These components are connected to each other through a bus system and/or another form of connection mechanism (not shown).

The input device 1303 may further comprise, for example, a keyboard, a mouse, etc.

The output device 1304 may output, to the outside, various information, comprising determined distance information, direction information, etc. The output device 1304 may comprise, for example, a display, a speaker, a printer, a communication network, and a remote output device connected to the communication network, etc.

Of course, for simplicity, FIG. 13 shows only some of components in the electronic device 1300 that are related to this disclosure, and components such as a bus, an input/output interface, etc., are omitted. In addition, according to specific application situations, the electronic device 1300 may further comprise any other appropriate components.

### Illustrative computer program product and computer-readable storage medium

In addition to the foregoing method and device, embodiments of this disclosure may also relate to a computer program product, which comprises computer program instructions. When the instructions are run by a processor, the processor is enabled to perform the steps, of the instruction generation method and/or the instruction execution method according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages comprise an object-oriented programming language such as Java or C++, and further comprise a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer-readable storage medium, which stores computer program instructions. When the computer program instructions are run by the processor, the processor is enabled to perform the steps, of the instruction generation method and/or the instruction execution method according to the embodiments of this disclosure, that are described in the "Illustrative method" section of this specification.

The computer-readable storage medium may be one readable medium or any combination of a plurality of readable media. The readable medium may be a readable signal medium or a readable storage medium. The readable storage medium may comprise, for example but is not limited to electricity, magnetism, light, electromagnetism, infrared ray, or a semiconductor system, an apparatus, or a device, or any combination of the above. More specific examples (a non-exhaustive list) of the readable storage medium comprise: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to comprise these modifications and variations.

## Claims

1. An instruction execution apparatus for a neural network processor, comprising:
a clock signal generating module, configured to adjust a first clock frequency of a first clock signal produced by a clock signal source to generate an output clock signal, wherein a clock frequency of the output clock signal comprises a second clock frequency, the second clock frequency being lower than the first clock frequency; and
a hardware computing module, configured to determine operation instructions and execute the operation instructions based on the output clock signal.

2. The apparatus of claim 1, wherein the clock frequency of the output clock signal is variable, and the clock frequency of the output clock signal gradually increases from the second clock frequency to the first clock frequency.

3. The apparatus of claim 1 or 2, wherein the clock signal generating module comprises:
a signal converting unit, configured to adjust the first clock frequency of the first clock signal to obtain a second clock signal; and
a logic device, configured to perform a logic operation on the first clock signal and the second clock signal to obtain the output clock signal.

4. The apparatus of claim 3, wherein the signal converting unit comprises:
a plurality of counters, configured to count a number of pulses of the first clock signal to obtain an output number; and
a comparator, configured to compare the output number with a preset number to obtain the second clock signal.

5. The apparatus of claim 4, wherein the plurality of counters comprises:
a first counter, configured to count, based on a preset number of cycles, the number of pulses of the first clock signal to obtain a first count;
a second counter, configured to, in response to the first count not reaching the first number, output a second number; and in response to the first count reaching the first number, update the second number based on a preset step size, to obtain an updated second number; and
a third counter, configured to count, based on the second number or the updated second number, the number of pulses of the first clock signal to obtain the output number.

6. An instruction generation method for a neural network processor, comprising:
determining a first instruction sequence corresponding to a neural network model to be processed by a neural network processor;
determining, based on hardware resources of the neural network processor, power consumption of respective hardware units in executing respective instructions of the first instruction sequence;
determining an instruction executed by a first hardware unit among the hardware units whose power consumption is greater than a power consumption threshold as a first instruction;
generating, based on the first instruction, a second instruction having an input data address and an output data address that are the same as those of the first instruction; and
generating, based on the first instruction sequence and the second instruction, a second instruction sequence executable by the neural network processor.

7. The method of claim 6, wherein the generating, based on the first instruction, a second instruction having an input data address and an output data address that are the same as those of the first instruction comprises:
determining the first instruction as the second instruction; or
generating, based on the first instruction, the second instruction that has a same function as the first instruction but a lower computational load than the first instruction.

8. The method of claim 7, wherein the generating, based on the first instruction, the second instruction that has a same function as the first instruction but a lower computational load than the first instruction comprises:
determining, based on the power consumption of executing the first instruction by the first hardware unit, a duration of drop of voltage of the first hardware unit;
determining the computational load based on the duration of drop of voltage of the first hardware unit; and
generating the second instruction based on the first instruction and the computational load.

9. The method of any one of claims 6-8, wherein the generating, based on the first instruction sequence and the second instruction, a second instruction sequence executable by the neural network processor comprises:
inserting, in the first instruction sequence, the second instruction that is the same as the first instruction, to generate the second instruction sequence executable by the neural network processor.

10. The method of any one of claims 6-8, wherein the generating, based on the first instruction sequence and the second instruction, a second instruction sequence executable by the neural network processor comprises:
inserting, before the first instruction in the first instruction sequence, the second instruction that has a same function as the first instruction but a lower computational load than the first instruction, to generate the second instruction sequence executable by the neural network processor.

11. The method of any one of claims 6-8, wherein the determining, based on hardware resources of the neural network processor, power consumption of respective hardware units in executing respective instructions of the first instruction sequence comprises:
determining, based on the hardware resources of the neural network processor, a performance parameter of the neural network processor; and
determining, based on the performance parameter, the power consumption of the respective hardware units in executing the respective instructions of the first instruction sequence.

12. An instruction execution method for a neural network processor, comprising:
determining a plurality of operation instructions for processing feature data;
processing the feature data based on a second instruction in the plurality of operation instructions, to obtain a first output data; and
processing the feature data based on a first instruction in the plurality of operation instructions which has an input data address and an output data address that are the same as those of the second instruction, to obtain a second output data.

13. The method of claim 12, wherein the second instruction is an instruction that is the same as the first instruction, or the second instruction is an instruction that has the same function as the first instruction but the lower computational load than the first instruction.

14. An instruction generation apparatus for a neural network processor, comprising:
a first determining module, configured to determine a first instruction sequence corresponding to a neural network model to be processed by a neural network processor;
a second determining module, configured to determine, based on hardware resources of the neural network processor, power consumption of respective hardware units in executing respective instructions of the first instruction sequence;
a third determining module, configured to determine an instruction executed by a first hardware unit among the hardware units whose power consumption is greater than a power consumption threshold as a first instruction;
a first generating module, configured for generating, based on the first instruction, a second instruction having an input data address and an output data address that are the same as those of the first instruction; and
a second generating module, configured for generating, based on the first instruction sequence and the second instruction, a second instruction sequence executable by the neural network processor.

15. An instruction execution apparatus for a neural network processor, comprising:
a first determining module, configured to determine a plurality of operation instructions for processing feature data;
a first processing module, configured for processing the feature data based on a second instruction in the plurality of operation instructions, to obtain a first output data; and
a second processing module, configured for processing the feature data based on a first instruction in the plurality of operation instructions which has an input data address and an output data address that are the same as those of the second instruction, to obtain a second output data.

16. A computer-readable storage medium, the storage medium storing thereon a computer program, the computer program being configured for implementing the instruction generation method for a neural network processor of any one of claims 6-11, or implementing the instruction execution method for a neural network processor of claim 12 or 13.

17. An electronic device, the electronic device comprising:
a processor; and
a memory configured for storing processor-executable instructions,
wherein the processor is configured for reading the executable instructions in the memory, and executing the executable instructions to implement the instruction generation method for a neural network processor of any one of claims 6-11, or implement the instruction execution method for a neural network processor of claim 12 or 13.
